(19) Europäisches Patentamt
European Patent Office
Office européen des brevets

(11) **EP 2 310 821 B1**

(12) **EUROPÄISCHE PATENTSCHRIFT**

(45) Veröffentlichungstag und Bekanntmachung des Hinweises auf die Patenterteilung:
**07.11.2018  Patentblatt 2018/45**

(21) Anmeldenummer: **09779900.1**

(22) Anmeldetag: **23.06.2009**

(51) Int Cl.:
*G01L 9/00* *(2006.01)*        *C03C 10/00* *(2006.01)*
*C04B 35/645* *(2006.01)*

(86) Internationale Anmeldenummer:
**PCT/EP2009/057827**

(87) Internationale Veröffentlichungsnummer:
**WO 2010/015456 (11.02.2010 Gazette 2010/06)**

(54) **VERFAHREN ZUR HERSTELLUNG EINES ELASTISCHEN KÖRPERS AUS AI2O3-KERAMIK, MESSMEMBRAN FÜR EINEN DRUCKSENSOR UND DRUCKSENSOR MIT DERARTIGER MESSMEMBRAN**

METHOD FOR THE PRODUCTION OF AN ELASTIC BODY FROM AI2O3 CERAMICS, MEASURING MEMBRANE FOR A PRESSURE SENSOR, AND PRESSURE SENSOR HAVING SUCH A MEASURING MEMBRANE

PROCÉDÉ DE FABRICATION D'UN CORPS ÉLASTIQUE RÉALISÉ EN CÉRAMIQUE AL2O3, MEMBRANE DE MESURE POUR UN CAPTEUR DE PRESSION ET CAPTEUR DE PRESSION COMPORTANT UNE TELLE MEMBRANE DE MESURE

(84) Benannte Vertragsstaaten:
**AT BE BG CH CY CZ DE DK EE ES FI FR GB GR HR HU IE IS IT LI LT LU LV MC MK MT NL NO PL PT RO SE SI SK TR**

(30) Priorität: **05.08.2008   DE 102008036381**

(43) Veröffentlichungstag der Anmeldung:
**20.04.2011   Patentblatt 2011/16**

(73) Patentinhaber: **Endress+Hauser SE+Co. KG
79689 Maulburg (DE)**

(72) Erfinder:
• **HEGNER, Frank
  79540 Lörrach (DE)**
• **ROßBERG, Andreas
  79713 Bad Säckingen (DE)**
• **KASTNER, Frank
  07639 Weißenborn (DE)**
• **LUDWIG, Henry
  07548 Gera (DE)**
• **OBERBACH, Uta
  07629 Reichenbach (DE)**

(74) Vertreter: **Andres, Angelika Maria et al
Endress+Hauser (Deutschland) AG+Co. KG
PatServe
Colmarer Strasse 6
79576 Weil am Rhein (DE)**

(56) Entgegenhaltungen:
**EP-A2- 2 067 754        DE-A1- 10 052 053
US-A1- 2003 118 802        US-A1- 2003 125 189**

**EP 2 310 821 B1**

**Beschreibung**

Die Erfindung betrifft eine Messmembran aus $Al_2O_3$ keramik und einen Drucksensor mit einer solchen Messmembran. Elastische Verformungskörper werden bei Drucksensoren in Form von Messmembranen eingesetzt. Ein Drucksensor umfasst gewöhnlich eine Messmembran, welche mit dem zu messenden Druck beaufschlagbar ist und eine druckabhängige Verformung erfährt. Der Drucksensor umfasst weiterhin gewöhnlich einen Wandler, mit welchem die Verformung des Verformungskörpers bzw. der Messmembran in ein Signal umgesetzt wird, insbesondere in ein elektrisches Signal. Beispiele für derartige Wandler sind kapazitive Wandler, resistive Wandler oder Wandler mit einem mechanischen Resonator. Ein Überblick zu Drucksensoren und gängigen Wandlerprinzipien ist in "Drucksensoren" von Pfeifer und Werthschützky, Berlin 1989, gegeben.

Die Entwicklung von keramischen Drucksensoren, insbesondere mit Verformungskörpern bzw. Messmembranen aus einer $Al_2O_3$- Keramik mit einem kapazitiven Wandler für die industrielle Prozessmesstechnik, ist insbesondere von Hegner et al. vorangetrieben worden. Beispielhaft seien hierzu die Europäischen Patente EP0351701 B1, EP0414871 B1 und EP0445382 B1 genannt.

*Die Offenlegungsschrift US 2003/0125189 A1 offenbart eine transluzente polykristalline Korundkeramik und ein Verfahren zu ihrer Herstellung, wobei als Anwendung insbesondere Zahnimplantate genannt sind, da die Transluzenz zu einer guten farblichen Anpassung an die Umgebung führen soll.*

*Die Patentschrift DE 100 52 053 A1 offenbart eine Druckmesszelle mit einem Grundkörper aus einer Aluminiumoxidkeramik, einer mit dem Grundkörper unter Bildung einer Messkammer verbundenen Membran aus einer Aluminiumoxidkeramik, die im Betrieb eine von einem zu messenden Druck abhängige Auslenkung erfährt, einem durch eine membran-zugewandte Oberfläche des Grundkörpers gebildeten Membranbett, auf das mindestens eine Elektrode aufgebracht ist, die zusammen mit einer auf der Membran aufgebrachten Gegenelektrode einen Kondensator bildet, dessen Kapazität ein Maß für die Auslenkung der Membran ist.*

Verformungskörper bzw. Messmembranen aus einer $Al_2O_3$- Keramik sind insoweit vorteilhaft, als sie eine große Langzeitstabilität und Hysteresefreiheit aufweisen. Weiterer Optimierungsbedarf besteht jedoch bei der Bruchspannung, weil damit die Empfindlichkeit bzw. Überlastfestigkeit eines Drucksensors vergrößert werden kann.

EP 0756586 B1 (Krell) betrifft zwar nicht speziell elastische Verformungskörper bzw. Messmembranen, aber es enthält doch einen guten Überblick über hochfeste Aluminiumoxidwerkstoffe. Nach Krell konnten hochfeste, hochreine, feinkörnige Aluminiumoxid-Werkstoffe nur durch die Wahl von hochaktiven, feinkörnigen, hochreinen Ausgangspulvern erreicht werden, mit denen durch ein geeignetes Formgebungsverfahren ein defektarmes, porenfreies Gefüge erreicht wurde. Von Krell werden ausnahmslos Formgebungsverfahren beschrieben, die von einem flüssigen Schlicker ausgehen. Durch geeignete Verfahren wie Gelcasting oder Druckfiltration wird dem Schlicker Wasser entzogen, und es bildet sich im Idealfall ein homogener Grünkörper. Der entscheidende Vorteil der flüssigen Formgebung ist die Tatsache, dass durch die anfängliche Beweglichkeit der Feststoffteilchen im flüssigen Medium eine möglichst dichte und homogene Packung der Feststoffteilchen bei geeigneter Prozessführung erreicht wird. Dadurch können defektarme Gefüge in den Sinterkörpern mit hohen mechanischen Festigkeiten erreicht werden. Solche defektarmen Gefüge bzw. Formkörper können nach Krell über die üblichen Formgebungsverfahren, wie zum Beispiel Trockenpressen, nicht erreicht werden. Trockenpressen führt zu unzureichender Gründichte bzw. Dichteinhomogenitäten im Formkörper und bei der Sinterung zu härte- und festigkeitsmindernden Defekten. Alle gebräuchlichen Pressverfahren basieren auf der Verdichtung von Granulaten, die über u.a. Sprühtrocknung hergestellt werden. Bedingt durch den Habitus der Granulate lässt es sich nicht vermeiden, dass es zwischen und in den verdichteten Granulaten zur Ausbildung von Hohlräumen kommt, die beim Sinterprozess nicht vollständig entfernt werden können. Durch diese verbleibenden Fehlstellen im Gefüge werden die mechanischen Eigenschaften negativ beeinflusst.

Insoweit erscheint der Weg für die von Krell vorgegebenen Formgebungsverfahren, die von einem Schlicker ausgehen, vorgezeichnet. Jedoch sind diese Formgebungsverfahren sehr aufwändig und für eine Massenproduktion von Verformungskörpern für Drucksensoren zu teuer.

Zudem erlaubt Krell vergleichsweise große Anteile von glasbildenden Sinterhilfsmitteln, insbesondere $SiO_2$. Diese Sinterhilfsmittel ermöglichen eine reduzierte Sintertemperatur und verringern dadurch das Größenwachstum der Körner, was zur Erhöhung der Bruchspannung sowie der Härte führen kann. Andererseits steht eine Glasphase einer Verwendung der Sinterkörpers in einem elastischen Körper entgegen, der in der Messtechnik eingesetzt werden soll. Untersuchungen im Zusammenhang mit der vorliegenden Erfindung haben nämlich gezeigt, dass Glasphasen im Gefüge die Relaxationsfähigkeit des Sinterkörpers und die Korrosionsfestigkeit verschlechtern. Damit ist der Weg der Größenbegrenzung über $SiO_2$ praktisch nicht verfügbar.

Es ist daher die Aufgabe der vorliegenden Erfindung Messmembranen für Drucksensoren und Drucksensoren mit solchen Messmembranen die unter vertretbaren Kosten für die Massenproduktion herstellbar sind, anzugeben.

Die Aufgabe wird erfindungsgemäß gelöst durch die Messmembran für einen Drucksensor gemäß dem unabhängigen Patentanspruch 1 und den Drucksensor gemäß dem unabhängigen Patentanspruch 5. Verfahren zur Herstellung einer erfindungsgemäßen Messmembran aus einer $Al_2O_3$-Keramik verwendet eine Tonerde,

wobei die Tonerde einschließlich ggf. vorhandener MgO-Bestandteile eine Reinheit von mindestens 99,8%, vorzugsweise 99,9% aufweist, und wobei der Anteil des MgO nicht mehr als 2000 ppm, vorzugsweise nicht mehr als 1000 ppm, bezogen auf die Masse des $Al_2O_3$ beträgt,

wobei die Tonerde, bezogen auf die Masse des $Al_2O_3$, in Summe einen Verunreinigungsanteil von weniger als 200 ppm, vorzugsweise weniger als 100 ppm, $SiO_2$, $Na_2O$, $K_2O$, CaO und weiteren anorganischen Verunreinigungen aufweist,

wobei die Tonerde eine spezifische Oberfläche von nicht weniger als 10 $m^2$/g aufweist,

wobei die Tonerde, kumuliert über 50% der Masse, eine Korngröße $d_{50}$ von nicht mehr als 0,3 $\mu$m aufweist,

wobei mit der Tonerde sowie organischen und ggf. anorganischen Zusätzen über wässrige Aufbereitung ein homogenes Gemisch erzeugt wird,

wobei das Gemisch, bezogen auf die Masse des $Al_2O_3$, bis zu 2000 ppm MgO, vorzugsweise nicht mehr als 1000 ppm MgO enthält,

wobei das Gemisch, bezogen auf die Masse des $Al_2O_3$, nicht weniger als 200 ppm MgO, vorzugsweise nicht weniger als 400 ppm MgO enthält,

wobei das Gemisch, bezogen auf die Masse des $Al_2O_3$, in Summe einen Verunreinigungsanteil von weniger als 200 ppm, vorzugsweise weniger als 100 ppm, $SiO_2$, $Na_2O$, $K_2O$, CaO und weiteren anorganischen Verunreinugungen aufweist,

wobei aus diesem Gemisch ein pressfähiges Sprühgranulat erzeugt wird,

wobei das Sprühgranulat anschließend mittels eines uniaxialen Pressverfahrens zu einem homogenen Grünkörper geformt wird,

wobei der Grünkörper einem ein- oder mehrstufigen Sinterprozess ausgesetzt wird,

wobei die resultierende elastische Messmembran eine Biegebruchspannung $\sigma_c$ aufweist, deren Verteilung $F(\sigma_c)$ durch die Weibull-Parameter $\sigma_0 \geq 800$ MPa, vorzugsweise $\sigma_0 \geq 850$ MPa, und $m \geq 24$ gegeben ist, wobei gilt:

$$F(\sigma_c) = 1 - \exp\left[-\left(\frac{\sigma_c}{\sigma_0}\right)^m\right]$$

wobei die mittlere Korngröße des gesinterten Materials der Messmembran welche als der Medianwert der Schnittflächenverteilung ermittelt wird, nicht mehr als 2 $\mu$m, vorzugsweise nicht mehr als 1 $\mu$m beträgt, und

wobei das gesinterte Material der Messmembran eine Dichte von nicht weniger als 3,98 $g/m^2$ aufweist.

Das gesinterte Material der Messmembran weist vorzugsweise weiterhin ein Gefüge mit Inhomogenitäten mit einer dimensionslosen Defektdichte von nicht mehr als $30 \cdot 10^{-3}$ auf, wobei die Defekte einer oder mehrerer der folgenden Kategorien angehören:

Risse und/oder poröse Gebiete entlang der Grenzen von Pulveraggregaten/Pulveragglomeraten,

nestartige Gefügebereiche aufgelockerter mit Poren durchsetzter Gefügestruktur

und/oder Poren mit einem die doppelte Gefügekorngrösse übersteigenden Durchmesser,

Körner mit einem Durchmesser von mehr als 10 $\mu$m und/oder mehr als 10 $\mu$m große Agglomerate einzelner Körner einem die fünffache Korngröße übersteigenden mittleren Durchmesser.

In einer Weiterbildung des Verfahrens umfasst der Sinterprozess des Verfahrens ein Vorsintern bei 1250°C - 1350°C, wobei der Sinterprozess weiterhin eine Nachverdichtung unter Schutzgasatmosphäre bei Drücken von $\geq$ 100 MPa und Temperaturen von 1250°C - 1400°C umfasst.

Das Dichtsintern bei 1250°C bis 1400°C kann in einer anderen Ausgestaltung des Verfahrens auch ohne die Nachverdichtung unter Schutzgasatmosphäre erfolgen.

Gemäß einer Weiterbildung des Verfahrens wird bei dem uniaxialen Pressen ein Presswerkzeug verwendet, welches eine Oberflächenbeschichtung aufweist, welche Kohlenstoff enthält.

In einer Ausgestaltung des Verfahrens weist das pressfähige Sprühgranulat eine Größenverteilung mit einer Untergrenze von nicht weniger als 20 $\mu$m, vorzugsweise nicht weniger als 30 $\mu$m, und einer Obergrenze von nicht mehr als 100 $\mu$m, vorzugsweise nicht mehr als 50 $\mu$m auf.

Zur Einstellung der Deformierbarkeit der Körner des Sprühgranulats stehen der Wassergehalt, der Anteil organischer Zusätze, insbesondere von Bindern, Dispergatoren und Gleitmitteln als Parameter zur Verfügung.

In einer Ausgestaltung des Verfahrens weist das pressfähige Sprühgranulat einen Anteil an organischen Zusätzen von nicht mehr als 12 Masse-%, vorzugsweise nicht mehr als 9 Masse-% auf.

In einer Ausgestaltung des Verfahrens sind dem Sprühgranulat Verbindungen von Elementen der Alkali- und Erdalkaligruppe beigemischt, wobei der Anteil dieser Verbindungen nicht mehr als 500 ppm beträgt.

In einer Ausgestaltung des Verfahrens wird bei dem uniaxialen Pressen zur Formgebung des Sprühgranulats ein Pressdruck im Bereich von 200 - 300 MPa eingesetzt.

In einer Ausgestaltung des Verfahrens wird bei dem uniaxialen Pressen eine Gründichte der gepressten Formkörper von nicht weniger als 55 % der theoretischen bzw. maximal erzielbaren Dichte von gesintertem $Al_2O_3$ erzielt.

In einer Ausgestaltung des Verfahrens umfasst das uniaxiale Pressen zum Formen des Grünkörpers mehrere Haltezeiten bei konstantem Pressdruck. Diese Haltezeiten dienen insbesondere zur optimalen Entlüftung und Deformation des Grünkörpers und zur Relaxation von Wandreibung. Gemäß einer Weiterbildung des Verfahrens erfolgt das uniaxiale Pressen unter definierten klimatischen Bedingungen, insbesondere bei einer relativen Luftfeuchte von nicht mehr als 40% und einer Arbeitstemperatur zwischen etwa 20°C und 23°C.

Die erfindungsgemäße Messmembran für einen Drucksensor, die insbesondere mit dem bentribenen Verfahren hergestellt sein kann, weist eine $Al_2O_3$-Keramik auf mit einem $Al_2O_3$-Gehalt von nicht weniger als 99,8 Masse-%, vorzugsweise nicht weniger als 99,9 Masse-%, einer Dichte von nicht weniger als 3,98 g/cm$^3$ und einer mittleren Gefügekorngröße von $d \leq 2\ \mu m$, vorzugsweise $d \leq 1\ \mu m$, wobei die $Al_2O_3$-Keramik, bezogen auf die Masse des $Al_2O_3$ bis zu 2000 ppm MgO, vorzugsweise nicht mehr als 1000 ppm MgO, enthält, und wobei die $Al_2O_3$-Keramik, bezogen auf die Masse des $Al_2O_3$, in Summe einen Verunreinigungsanteil von weniger als 200 ppm, vorzugsweise weniger als 100 ppm, $SiO_2$, $Na_2O$, $K_2O$, CaO und weiteren anorganischen Verunreinigungen aufweist.

In einer Weiterbildung der Erfindung weist die Messmembran eine $Al_2O_3$-Keramik mit einer Biegebruchspannung ($\sigma_c$) auf, deren Verteilung $F(\sigma_c)$ durch die Weibull-Parameter $\sigma_0 \geq 800$ MPa, vorzugsweise $\sigma_0 \geq 850$ MPa, und m $\geq 24$ gegeben ist.

In einer Weiterbildung der Erfindung weist die Messmembran eine Oberfläche oder zwei Oberflächen auf, die durch Schleifen und/oder Läppen geglättet ist bzw. sind. Es kann dabei vorteilhaft sein, die Messmembran nach dem Schleifen und/oder Läppen einer Temperaturbehandlung, dem Glühen, auszusetzen, um durch das Schleifen bzw. Läppen eingebrachte Defekte auszuheilen.

Ein erfindungsgemäßer Drucksensor umfasst einen Grundkörper und eine erfindungsgemäße Messmembran, wobei der Grundkörper als Werkstoff eine Aluminiumoxidkeramik aufweist.

In einer Weiterbildung des erfindungsgemäßen Drucksensors sind die Messmembran und der Grundkörper mittels eines Aktivhartlots gefügt, beispielsweise mittels einer Zr-Ni-Ti-Legierung.

In einer Weiterbildung des Drucksensors ist zwischen dem Grundkörper und der Messmembran eine Druckkammer gebildet, wobei die Druckkammer bei einer Dicke der Messmembran von 100 $\mu m$ eine He-Leckrate pro Membranfläche von nicht mehr als $2 \cdot 10^{-11}$ mbar·l / (s · m$^2$) vorzugsweise nicht mehr als $1 \cdot 10^{-11}$ mbar·l / (s · m$^2$), besonders bevorzugt nicht mehr als $0,5 \cdot 10^{-11}$ mbar·l / (s · m$^2$), aufweist.

Die einander zugewandten Stirnflächen des Grundkörpers und der Messmembran weisen im Falle eines kapazitiven Drucksensors jeweils mindestens eine Elektrode auf, wobei die Elektrode der Messmembran beispielsweise Tantal und die Elektrode des Grundkörpers beispielsweise Tantal oder eine leitfähige Schicht aufweisen können, die beispielsweise mindestens ein Edelmetall und Glas enthält. In einer bevorzugten Ausgestaltung der Erfindung umfasst die leitfähige Schicht Au, Pt und Glas.

Der mit dem erfindungsgemäßen Verfahren hergestellte Verformungskörper kann insbesondere scheibenförmig sein, wobei beispielsweise ein Außendurchmesser zwischen 5 mm und 40 mm mit einer Toleranz von beispielsweise +/- 0,15 mm und einer Dicke zwischen beispielsweise 0,10 mm und 3 mm als Messmembran für einen Drucksensor geeignet ist.

Die Erfindung wird nun anhand eines in den Figuren gezeigten Ausführungsbeispiels erläutert. Es zeigt:

1:      Fig. ein Flussdiagramm eines Verfahrens zum Hestellen einen erfindungsgemäßen Messmembran, und

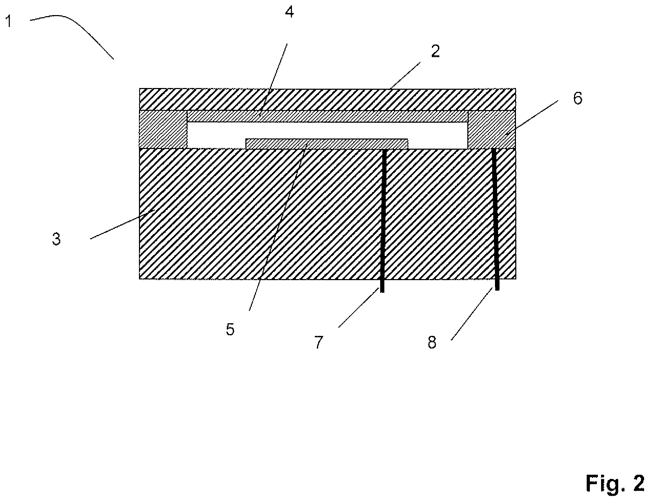

Fig. 2:      einen Längsschnitt durch einen erfindungsgemäßen Drucksensor.

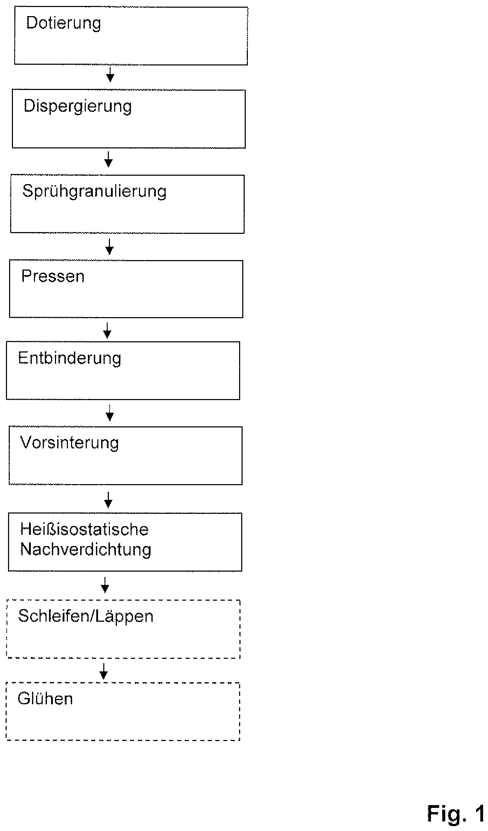

Als Rohstoff für das in Fig. 1 gezeigte Verfahren wird eine Tonerde mit folgenden Eigenschaften eingesetzt:

|  |  |
| --- | --- |
| - spezifische Oberfläche: | 13 m$^2$/g |
| - Korngröße $d_{50}$, kumuliert über 50% der Masse: | 0,13 $\mu m$ |
| - Reinheit: | 99,99 % |

Als Dotierung wird MgO in Form von Magnesiumhydroxidcarbonat verwendet, welches in einer solchen Menge zugegeben wird, dass der gewünschte resultierende MgO-Anteil erzielt wird.

Dispergierung

Die Tonerde wird in ein Pressgranulat überführt. Dafür wird zunächst ein wässriger Schlicker hergestellt, welcher in einer Rührwerkskugelmühle dispergiert wird. Es werden 3.000 g Tonerde unter Zusatz von 1,6 l dest. Wasser, 500-1000 ppm MgO, 0,5 - 1,5 % Verflüssiger, 1,5- 7% Binde- und Gleitmittel für eine Dauer von z.B. 30 min im Kreislauf dispergiert. Danach wird der Schlicker über ein 100 $\mu$m-Sieb abgesiebt.

Sprühgranulierung

Als nächster Schritt wird der Schlicker in einem Sprühturm bei einer Turmtemperatur von 150 -250 °C versprüht. Das erhaltene Granulat wird über ein 315 $\mu$m-Sieb abgesiebt. Die Granulatgrößenverteilung wird bestimmt. Der $X_{50}$-Wert liegt in einem Bereich von 20- 40 $\mu$m, vorzugsweise 30 $\mu$m. Das Granulat besitzt eine Feuchte von max. 0,4 %.

Uniaxiales Pressen

Das uniaxiale Pressen der Bauteile erfolgt auf einer hydraulischen Presse. Es werden Scheiben mit einem Durchmesser von 5- 40 mm und einer Höhe von 1,0 - 5 mm hergestellt. Der spezifische Pressdruck liegt im Bereich 200-300 MPa, vorzugsweise 210 MPa.

Thermische Entbinderung

Anschließend erfolgt die thermische Entbinderung der Grünkörper. Dies erfolgt in einem Kammerofen mit thermischer Nachverbrennung. In Stufen wird die Temperatur über einen Zeitraum von 100 - 120 Std. auf 1.000 °C erhöht. Danach wird in 360 min auf Raumtemperatur definiert abgekühlt.

Vorsinterung

Die Vorsinterung erfolgt in einem Hochtemperaturofen. Die entbinderten Formkörper werden mit einer Aufheizrate von 2 K/min bis zu einer Temperatur von 1250-1350°C so gesintert, dass keine offene Porosität mehr vorhanden ist. Die Haltezeit bei z.B. 1300 °C beträgt 2 Stunden. Die Abkühlung erfolgte mit 10 K/min.

Heißisostatische Nachverdichtung (HIP)

Die vorgesinterten Formkörper werden in einer heißisostatischen Presse unter Argonatmosphäre bei einem Druck von ≥ 100 MPa für 2 Stunden bei 1250 - 1400 °C nachverdichtet.

Schleifen und Läppen

Die Bauteile werden auf einer Feinschleifmaschine, beispielsweise mit Diamant D64C50 geschliffen. Danach erfolgt das Läppen mittels Borcarbid, beispielsweise mit einer Körnung F 600.

Glühen

Um die beim Schleifen und Läppen induzierten Spannungen und Mikrorisse aus den Bauteilen zu entfernen, werden diese in einem Kammerofen geglüht. Dies erfolgt beispielsweise bei einer Temperatur von 1400 °C mit einer Haltezeit bei dieser Temperatur von 4 Stunden.

Festigkeitsmessung

Die Festigkeit wird mittels Doppelringbiegeversuch in Anlehnung an die DIN ISO 6474 durchgeführt.

Geometrische Daten des Bauteils

z. B.

| Durchmesser | 32,4 mm +/-0,15 |
| Höhe | 0,24 mm +/-0,01 |
| Ebenheit (Wt) | 8 $\mu$m |
| Rauheit (Ra) | 0,4 $\mu$m |
| Heliumleckdichtigkeit: | $\leq$ 1x10$^{-14}$ mbar x l x s$^{-1}$ |

Die Heliumleckdichtigkeit wurde insbesondere anhand eines erfindungsgemäßen Drucksensors ermittelt, der in Fig. 2 dargestellt ist.

Der erfindungsgemäße Drucksensor 1 umfasst eine kreisscheibenförmige Messmembran 2, die mittels des erfindungsgemäßen Verfahrens hergestellt wurde, und einen ebenfalls kreisscheibenförmigen Grundkörper 3, der ebenfalls Korund aufweist, wobei der Werkstoff des Grundkörpers 3 nicht die genannten Anforderungen an die Reinheit und Bruchfestigkeit erfüllen muss, denn er ist einerseits nicht medienberührend und andererseits aufgrund seiner erheblich größeren Dicke nicht solchen Biegespannungen ausgesetzt wie die Messmembran.

Die Messmembran weist auf ihrer dem Grundkörper zugewandten Seite eine Messelektrode 4 auf, welche beispielsweise Ta aufweist.

Gegenüber der Messelektrode 4 weist der Grundkörper 3 auf einer Stirnfläche eine Gegenelektrode 5 auf, welche aus den gleichen Materialien wie die Messelektrode bestehen kann oder aus eine Paste gebrannt ist, die Glas, Au und Pt enthält. Die Messmembran 2 und der Grundkörper 3 sind mittels eines Aktivhartlotformteils 6, welches eine Zr-Ni-Ti-Legierung enthält, gefügt, wobei das Aktivhartlot zugleich zur Kontaktierung der Messelektrode 4 dient.

Zur Ableitung der Potentiale der Messelektrode 4 und der Gegenelektrode 5 sind das Aktivhartlot 6 und die Gegenelektrode 5 über elektrische Durchführungen 8, 7, die sich in axialer Richtung durch den Grundkörper erstrecken, kontaktiert.

## Patentansprüche

1. Drucksensor, umfassend einen Grundkörper (3) und eine Messmembran (2),
   wobei der Grundkörper als Werkstoff eine Aluminiumoxidkeramik aufweist, wobei die Messmembran und der Grundkörper mittels eines Aktivhartlots (6), beispielsweise eine Zr-Ni-Ti-Legierung, gefügt sind, wobei die Messmembran eine Al$_2$O$_3$-Keramik aufweist mit einem Al$_2$O$_3$-Gehalt von nicht weniger als 99,8 Masse-%, vorzugsweise nicht weniger als 99,9 Masse-%, einer Dichte von nicht weniger als 3,98 g/cm$^3$ und einer mittleren Gefügekorngröße von d $\leq$ 1 $\mu$m, wobei die Al$_2$O$_3$-Keramik, bezogen auf die Masse des Al$_2$O$_3$ bis zu 2000 ppm MgO, vorzugsweise nicht mehr als 1000 ppm MgO enthält,
   wobei die Al$_2$O$_3$-Keramik, bezogen auf die Masse des Al$_2$O$_3$, in Summe einen Verunreinigungsanteil von weniger als 200 ppm, vorzugsweise weniger als 100 ppm, SiO$_2$, Na$_2$O, K$_2$O, CaO und weiteren anorganischen Verunreinigungen aufweist.

2. Drucksensor nach Anspruch 1, wobei die Messmembran (2) eine Al$_2$O$_3$-Keramik eine Biegebruchspannung $\sigma_c$ aufweist, deren Verteilung F($\sigma_c$) durch die Weibull-Parameter $\sigma_0 \geq$ 800 MPa, vorzugsweise $\sigma_0 \geq$ 850 MPa, und m $\geq$ 24 gegeben ist.

3. Drucksensor nach Anspruch 1 oder 2, wobei die Messmembran (2) mindestens eine Oberfläche aufweist, die durch Schleifen und/oder Läppen geglättet ist.

4. Drucksensor nach Anspruch 3, wobei die Messmembran (2) nach dem Schleifen und/oder Läppen geglüht wurde.

## Claims

1. Pressure sensor comprising a meter body (3) and a measuring diaphragm (2), wherein the meter body features an aluminum oxide ceramic as the material, wherein the measuring diaphragm and the meter body are joined by means of an active brazing solder (6), for example a Zr-Ni-Ti alloy,
   wherein the measuring diaphragm features an Al$_2$O$_3$ ceramic with an Al$_2$O$_3$ content of not less than 99.8% mass, preferably not less than 99.9% mass, a density of not less than 3.98 g/cm$^3$ and an average structure particle size of d $\leq$ 1 $\mu$m,
   wherein, in relation to the mass of the Al$_2$O$_3$, the Al$_2$O$_3$ ceramic contains up to 2000 ppm of MgO, preferably not more than 1000 ppm of MgO,
wherein, in relation to the mass of the $Al_2O_3$, the $Al_2O_3$ ceramic has in total an impurity share of less than 200 ppm, preferably less than 100 ppm, $SiO_2$, $Na_2O$, $K_2O$, CaO and other inorganic impurities.

2. Pressure sensor as claimed in Claim 1, wherein the measuring diaphragm (2) features an $Al_2O_3$ ceramic with a transverse rupture stress $\sigma c$, whose distribution $F(\sigma c)$ is defined by the Weibull parameter $\sigma c \geq 800$ MPa, preferably $\sigma c \geq 850$ MPa, and $m \geq 24$.

3. Pressure sensor as claimed in Claim 1 or 2, wherein the measuring diaphragm (2) has at least one surface which is smoothed by grinding and/or lapping.

4. Pressure sensor as claimed in Claim 3, wherein the measuring diaphragm (2) is annealed following the grinding and/or lapping.

**Revendications**

1. Capteur de pression comprenant un corps de base (3) et une membrane de mesure (2),
le corps de base présentant comme matériau une céramique en oxyde d'aluminium,
la membrane de mesure et le corps de base étant assemblés au moyen d'un métal d'apport de brasage fort, par exemple un alliage de Zr-Ni-Ti,
la membrane de mesure présentant une céramique en $Al_2O_3$ avec une teneur en $Al_2O_3$ d'au moins 99,8 % en masse, de préférence d'au moins 99,9 % en masse, d'une densité d'au moins 3,98 g/cm$^3$ et d'une taille moyenne du grain structurel de $d \leq 1$ $\mu$m,
la céramique en $Al_2O_3$ contenant, par rapport à la masse de l'$Al_2O_3$, jusqu'à 2 000 ppm de MgO, de préférence pas plus de 1 000 ppm de MgO,
la céramique en $Al_2O_3$ présentant, par rapport à la masse de l'$Al_2O_3$, au total une part d'impuretés inférieure à 200 ppm, de préférence inférieure à 100 ppm, $SiO_2$, $Na_2O$, $K_2O$, CaO et autres impuretés anorganiques.

2. Capteur de pression selon la revendication 1, pour lequel la membrane de mesure présente une céramique en $Al_2O_3$ avec une contrainte de rupture par flexion $\sigma c$, dont la répartition $F(\sigma c)$ est définie par les paramètres Weibull $\sigma c \geq 800$ MPa, de préférence $\sigma c \geq 850$ MPa, et $m \geq 24$.

3. Capteur de pression selon la revendication 1 ou 2, pour lequel la membrane de mesure présente au moins une surface, qui est lissée par rectification et/ou par rodage.

4. Capteur de pression selon la revendication 3, pour lequel la membrane de mesure a été recuite après rectification et rodage.

**Fig. 1**

Fig. 2

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 0351701 B1
- EP 0414871 B1
- EP 0445382 B1
- US 20030125189 A1
- DE 10052053 A1
- EP 0756586 B1

**In der Beschreibung aufgeführte Nicht-Patentliteratur**

- **PFEIFER ; WERTHSCHÜTZKY.** *Drucksensoren,* 1989